# NEW EUROPEAN PATENT SPECIFICATION

(11) **EP 2 299 247 B2**
(45) Date of publication and mention of the opposition decision: **31.08.2022**
(45) Mention of the grant of the patent: 23.10.2019
(21) Application number: 09170215.9
(22) Date of filing: 14.09.2009
(51) Int. Cl.: G01F 3/20, G01F 15/075, G01D 5/12, G06M 1/27, G06M 3/06

(54) **Electronic module for a gas meter**
Elektronisches Modul für ein Gasmessgerät
Module électronique pour compteur de gaz

(43) Date of publication of application: 23.03.2011
(73) Proprietor: Itron GmbH, 76185 Karlsruhe (DE)
(72) Inventor: CARVER, Andrew, 76351 Linkenheim (DE)
(74) Representative: Howson, Richard Giles Bentham

(56) References cited:
- EP-A1- 1 772 708
- EP-A1- 2 315 177
- CA-C- 2 528 401
- DE-A1- 10 113 378
- JP-A- 2003 065 824
- JP-A- 2007 147 552
- US-A- 4 463 354
- US-A- 4 470 010
- US-A1- 2008 238 711
- US-A1- 2008 238 711
- US-A1- 2009 153 357
- Anonymous: "Manual Kromschroder Flow meters", Manual Kromschroder Flow meters, 1 December 2004 (2004-12-01), pages 1-8,
- Operating instructions Flow meters Kromschrdder (11.5.1.2, Edition 02.08)

## Description

The present invention is related to a gas meter for supplying gas to residences, office buildings and the like, and more particularly to a gas meter including encoding means.

Natural gas is a well-known, clean, and relatively inexpensive fuel source. As such, gas distribution systems and gas meters have been widely installed in various population centers throughout the industrialized word.

In a conventional manner, a gas meter comprises a sealed external housing, a measurement module placed inside the housing and a totalizer which is a mechanical module including wheels and which is placed outside the housing which makes it possible to display mechanically the volume measured by the measurement module. A motion is typically transmitted by a drive train to a counter which thus serves to display the quantity of gas which has passed through the measuring module.

It is known to associate encoding means with the mechanical means driven by the measuring module. The encoding means provide an electronic relative to the gas volume totalization and hence an electronic indication or display of the gas volume measurement is possible.

The main components used in electronics are of two general types: passive (e.g. resistors and capacitors) and active (e.g. transistors and integrated circuits). The main difference between active and passive components is that active ones require to be powered in some way to make them work. Active components can also be used to amplify signals.

Previously, the active components are associated with the encoding means within the mechanical module. The electronic sensing is therefore dependent on the active electronics.

Such a gas meter suffers the shortcoming that the mechanical module is metrologically sealed and should not be open without recalibration. As the electronics is within this sealed area any failures will mean that the meter will need to be changed.

Other known solutions include picking up pulses from either a rotating disk within the mechanical module or from a magnet in one of the wheels. These solutions are however relative methods since a starting point for the counting needs to be programmed. The disadvantage is that the start value needs to be programmed correctly and also any loss of power will loose counts.

Optical character recognition has also been used with a camera external to the mechanical module but this would require set up for the type of index and rely on consistent reading conditions.

US 4463354 A discloses method and apparatus for communicating utility usage information from a utility usage location to a portable utility usage registering device. A utility usage detection circuit is provided at the utility usage location. The circuit is connectable to a conventional utility meter, e.g., a natural gas meter, and provides an electrical signal indicative of utility usage.

US 4470010 A discloses retrofit apparatus for attachment to a utility meter to detect revolutions of a dial arm of the utility meter. A piezoelectric crystal is provided against which a striker arm abuts. The striker arm is rotatable on an axle and is therefore movable relative to the piezoelectric crystal. A spring is tensioned so as to resiliently bias the striker arm against the crystal.

DE 10113378 A1 discloses a capacitor formed from a coded coating on the peripheral surface of a wheel, and an opposing coating on a fixed plate. The capacitance of the capacitor is dependent on the angular position of the wheel, and is measured. The coding may be in the form of a width coding of the coating. The calibration of the zero setting may be performed at manufacture.

An object of the present invention is to provide a gas meter in such a manner as to solve the above-described problems.

The object mentioned above is accomplished by a gas meter according to claim 1.

The passive encoding means can be inductive detection means.

The encoding means preferably comprise one passive sensor for each gear wheel.

The mechanical module is typically a sealed module which is placed on a housing of the meter that includes the measuring module.

The measuring module can comprise at least one deformable membrane which separates two adjacent displacement measuring chambers.

Other features and advantages of the invention will become apparent from the following description of an embodiment of the invention given by way of a nonlimiting example only, and with reference to the accompanying drawings, in which:
- Figure 1 is a perspective view of a gas meter according to the invention, and
- Figure 2 is a side cross-sectional view of the gas meter.

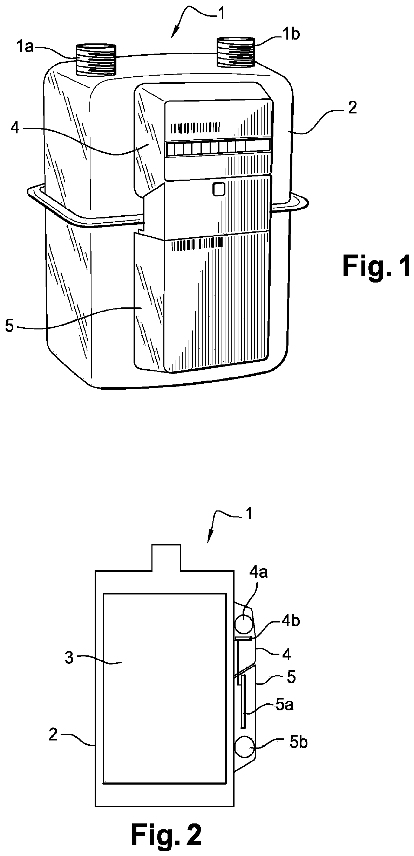

As illustrated in figures 1 and 2, a gas meter 1 according to the invention comprises a gas tight housing 2 containing a measuring module 3, a sealed mechanical module 4 that contains a mechanical totalizer or digitizer, and a remote electronic module 5 that can be connected to the housing 2 and disconnected from it.

When entering the gas meter 1 through a gas inlet 1a, the gas is routed toward the measuring module 3. The measuring module 3 can typically comprise at least one deformable membrane which separates two adjacent displacement measuring chambers. The gas whose volume is to be measured is injected into and evacuated from the measuring chambers and causes the membrane to move back and forth. Membrane motion is transmitted by a drive gear, not shown, to the totalizer or digitizer. The gas flows out of a gas outlet 1b of the meter 1.

The mechanical totalizer or digitizer includes a set of gears 4a driven by the drive gear. A passive sensor 4b detects the angular position of one or all of the gears 4a and hence acts as a non-volatile memory of the number of rotations that the gears 4a have made. For a better accuracy, every gear 4a is equipped with a sensor 4b, so that the position of all the gears 4a can be detected.

The passive sensor 4b is preferably based on tuned antennas. Since this inductive detection device includes only capacitor based sensors for detecting the rotary position of each wheel, no active components are within the sealed mechanical module 4.

The remote electronic module 5 contains active components 5a to treat numerically the signal coming from the encoding means of the mechanical module 4. The active components 5a are powered by a power source 5b, such as a battery. When a reading electronics is connected to the passive encoding means 4b, the digitised value of the mechanical module 4 can be used for processing, such as communication or datalogging. The electronic module 5 can therefore be changed without needing to change the mechanical module 4. The mechanical module 4 is hence equipped with a passive circuit 4b that can be driven to determine the absolute index value of the mechanical register. The remote electronics 5 to determine the index value can hence be freely interchanged.

This has the advantages that the parts with lower reliability can be easily changed. Each wheel 4a is read and so the reading would be an absolute reading, no specific programming being required.

The technical advantage is that the measurement is stable enough to read out the index drums without calibration or specific active electronics. The lifetime of the overall equipped meter is extended as there are only passive components under the sealed section of the meter. An absolute readout requires less configuration than a relative reading. Moreover, the inductive pick-up method is very immune to tampering.

Last, the part that is shipped within the gas meter is very low cost relative to other solutions that require active electronics within the mechanical module.

## Claims

1. Gas meter (1) comprising:
a measuring module (3) through which a gas volume flows,
a mechanical module (4) comprising mechanical means (4a) driven by the measuring module (3) for totalizing or digitising the gas volume, wherein the mechanical means (4a) comprise gear wheels (4a) driven by a drive gear, and passive electronic encoding means (4b) to detect the angular position of at least one of the gear wheels (4a) to act as a non-volatile memory of a number of rotations that the at least one of the gear wheels (4a) has made,
**characterized in that** the meter (1) further comprises a remote electronic module (5) containing active electronic elements (5a) electronically connected to the passive electronic encoding means (4b) and **in that** the remote electronic module (5), configured to treat numerically a signal from the passive electronic encoding means (4b), is arranged to be changed without needing to change the mechanical module (4).

2. Gas meter (1) according to claim 1, **characterized in that** the passive electronic encoding means (4b) are inductive detection means (4b).

3. Gas meter (1) according to claim 1 or claim 2, **characterized in that** the passive electronic encoding means (4b) comprise one passive sensor (4b) for each gear wheel (4a).

4. Gas meter (1) according to any one of claims 1 to 3, **characterized in that** the mechanical module (4) is a sealed module (4) which is placed on a housing (2) of the meter (1) that includes the measuring module (3).

5. Gas meter (1) according to any one of claims 1 to 4, **characterized in that** the measuring module (3) comprises at least one deformable membrane which separates two adjacent displacement measuring chambers, wherein movement of the deformable membrane is transmitted by the drive gear to the mechanical module (4) for totalizing or digitising the gas volume.

## Patentansprüche

1. Gasmessgerät (1), umfassend:
ein Messmodul (3), durch das ein Gasvolumen fließt,
ein mechanisches Modul (4), umfassend mechanische Mittel (4a), die durch das Messmodul (3) angesteuert werden, zum Summieren oder Digitalisieren des Gasvolumens, wobei die mechanischen Mittel (4a) Zahnräder (4a) umfassen, die durch ein Antriebsrad angetrieben werden, und passive elektronische Codierungsmittel (4b) zum Detektieren der Winkelposition mindestens eines der Zahnräder (4a), um als nichtflüchtiger Speicher einer Anzahl von Umdrehungen, die das mindestens eine der Zahnräder (4a) vorgenommen hat, zu wirken,
**dadurch gekennzeichnet, dass** das Messgerät (1) ferner ein entferntes elektronisches Modul (5) umfasst, das aktive elektronische Elemente (5a) enthält, die elektronisch mit den passiven elektronischen Codierungsmitteln (4b) verbunden sind, und dass das entfernte elektronische Modul (5), das konfiguriert ist, ein Signal von den passiven elektronischen Codierungsmitteln (4b) numerisch zu behandeln, dazu eingerichtet ist, geändert zu werden, ohne dass das mechanische Modul (4) geändert werden muss.

2. Gasmessgerät (1) nach Anspruch 1, **dadurch gekennzeichnet, dass** die passiven elektronischen Codierungsmittel (4b) induktive Detektionsmittel (4b) sind.

3. Gasmessgerät (1) nach Anspruch 1 oder 2, **dadurch gekennzeichnet, dass** die passiven elektronischen Codierungsmittel (4b) einen passiven Sensor (4b) für jedes Zahnrad (4a) umfassen.

4. Gasmessgerät (1) nach einem der Ansprüche 1 bis 3, **dadurch gekennzeichnet, dass** das mechanische Modul (4) ein auf ein Gehäuse (2) des Messgeräts (1) aufgesetztes abgedichtetes Modul (4) ist, das das Messmodul (3) aufweist.

5. Gasmessgerät (1) nach einem der Ansprüche 1 bis 4, **dadurch gekennzeichnet, dass** das Messmodul (3) mindestens eine verformbare Membran umfasst, die zwei benachbarte Wegmesskammern trennt, wobei die Bewegung der verformbaren Membran durch das Antriebsrad auf das mechanische Modul (4) übertragen wird zur Summierung oder Digitalisierung des Gasvolumens.

## Revendications

1. Compteur de gaz (1) comprenant :
un module de mesure (3) à travers lequel un volume de gaz s'écoule,
un module mécanique (4) comprenant des moyens mécaniques (4a) entraînés par le module de mesure (3) pour totaliser ou numériser le volume de gaz, les moyens mécaniques (4a) comprenant des roues dentées (4a) entraînées par un engrenage d'entraînement, et des moyens d'encodage électroniques passifs (4b) pour détecter la position angulaire d'au moins l'une des roues dentées (4a) pour agir comme une mémoire non volatile d'un nombre de rotations que l'au moins une des roues dentées (4a) a faites,
**caractérisé en ce que** le compteur (1) comprend en outre un module électronique distant (5) contenant des éléments électroniques actifs (5a) connectés électroniquement aux moyens d'encodage électroniques passifs (4b) et **en ce que** le module électronique distant (5), configuré pour traiter numériquement un signal provenant des moyens d'encodage électroniques passifs (4b), est agencé pour être changé sans avoir besoin de changer le module mécanique (4).

2. Compteur de gaz (1) selon la revendication 1, **caractérisé en ce que** les moyens d'encodage électroniques passifs (4b) sont des moyens de détection inductifs (4b).

3. Compteur de gaz (1) selon la revendication 1 ou la revendication 2, **caractérisé en ce que** les moyens d'encodage électroniques passifs (4b) comprennent un capteur passif (4b) pour chaque roue dentée (4a).

4. Compteur de gaz (1) selon l'une quelconque des revendications 1 à 3, **caractérisé en ce que** le module mécanique (4) est un module étanche (4) qui est placé sur un logement (2) du compteur (1) qui inclut le module de mesure (3).

5. Compteur de gaz (1) selon l'une quelconque des revendications 1 à 4, **caractérisé en ce que** le module de mesure (3) comprend au moins une membrane déformable qui sépare deux chambres de mesure de déplacement adjacentes, dans lequel un mouvement de la membrane déformable est transmis par l'engrenage d'entraînement au module mécanique (4) pour totaliser ou numériser le volume de gaz.
